# EUROPEAN PATENT APPLICATION

(11) **EP 4 838 581 A1**
(43) Date of publication of application: **11.11.2026**
(21) Application number: 26176363.5
(22) Date of filing: 04.05.2026
(51) Int. Cl.: H01M 4/58, H01M 4/48, H01M 4/505, H01M 4/525, H01M 10/0525

(54) **COMPOSITE POSITIVE ELECTRODE ACTIVE MATERIALS, POSITIVE ELECTRODES HAVING THE SAME, AND RECHARGEABLE LITHIUM BATTERIES INCLUDING THE POSITIVE ELECTRODES**

(30) Priority: 07.05.2025 KR 20250059340; 30.04.2026 KR 20260078530
(71) Applicant: Samsung SDI Co., Ltd., Yongin-si, Gyeonggi-do 17084 (KR)
(72) Inventor: KANG, Gwiwoon, 17084 Yongin-si (KR); LEE, Soonrewl, 17084 Yongin-si (KR); KIM, Young-Ki, 17084 Yongin-si (KR); KIM, Sangmi, 17084 Yongin-si (KR); DOO, Sungwook, 17084 Yongin-si (KR); KANG, Minchul, 17084 Yongin-si (KR)
(74) Representative: Maiwald GmbH

(57) **Abstract**

A composite positive electrode active material including a first positive electrode active material including a lithium iron phosphate-based compound and being in a form of secondary particles in which a plurality of primary particles are agglomerated. The composite positive electrode active material also includes a second positive electrode active material including a lithium manganese iron phosphate-based compound, the second positive electrode active material being in a form of secondary particles in which a plurality of primary particles are agglomerated. The composite positive electrode active material further incudes a third positive electrode active material including a lithium nickel-based composite oxide. The third positive electrode active material being about 5 wt% to about 25 wt% in the composite positive electrode active material based on a total of 100 wt% of the composite positive electrode active material. A weight ratio of the first positive electrode active material and the second positive electrode active material is about 5:1 to about 1:1. The secondary particles of the first positive electrode active material and the secondary particles of the second positive electrode active material having a particle diameter of greater than or equal to about 10 µm are included in an amount of greater than or equal to about 30 vol% based on a total of 100 vol% of the first positive electrode active material and the second positive electrode active material.

## Description

### BACKGROUND

### 1. Field

The present disclosure relates to composite positive electrode active materials, positive electrodes having composite positive electrode active materials, and rechargeable lithium batteries including positive electrodes having composite positive electrode active materials.

### 2. Description of the Related Art

A portable information device such as a cell phone, a laptop, smart phone, and the like or an electric vehicle has used a rechargeable lithium battery, having high energy density, as a driving power source. Recently, research has been actively conducted for use of a rechargeable lithium battery with high energy density as a driving power source for hybrid or electric vehicles or as a power source for power storage.

A lithium cobalt-based oxide such as lithium cobalt oxide (LiCoO₂), a lithium nickel-based composite oxide such as lithium nickel-cobalt-manganese oxide (NCM) and a lithium nickel-cobalt-aluminum oxide (NCA), and a lithium iron phosphate-based compound are used as positive electrode active materials in rechargeable lithium batteries. A lithium iron phosphate-based compound and a lithium manganese iron phosphate-based compound are used as low-cost positive electrode active materials, and the lithium iron phosphate-based compound and the lithium manganese iron phosphate-based compound use iron (Fe) (which is relatively inexpensive) as a main component, which is advantageous when compared to the high prices of nickel (Ni) and cobalt (Co).

The lithium iron phosphate-based compound and the lithium manganese iron phosphate-based compound each have an olivine structure, and, thus, each have superior cycle-life characteristics compared to other positive electrode materials. However, the lithium iron phosphate-based compound and the lithium manganese iron phosphate-based compound each have the disadvantage of low capacity and low energy density.

### SUMMARY

The present disclosure provides a composite positive electrode active material that has high pellet density, a positive electrode that has excellent low-temperature performance and low resistance, and a rechargeable lithium battery that has excellent cycle-life characteristics, improved capacity, and improved energy density, while maintaining competitive prices for manufacture.

Some example embodiments provide a composite positive electrode active material including a first positive electrode active material including a lithium iron phosphate-based compound, the first positive electrode active material being in a form of secondary particles in which a plurality of primary particles are agglomerated; a second positive electrode active material including a lithium manganese iron phosphate-based compound, the second positive electrode active material being in a form of secondary particles in which a plurality of primary particles are agglomerated; and a third positive electrode active material including a lithium nickel-based composite oxide, the third positive electrode active material being about 5 wt% to about 25 wt% based on a total of 100 wt% of the composite positive electrode active material, wherein a weight ratio of the first positive electrode active material and the second positive electrode active material is about 5:1 to about 1:1, and the secondary particles of the first positive electrode active material and the secondary particles of the second positive electrode active material having a particle diameter of greater than or equal to about 10 µm are included in an amount (a total amount) of greater than or equal to about 30 vol% based on a total of 100 vol% of the first positive electrode active material and the second positive electrode active material.

Some example embodiments provide a positive electrode including a positive electrode current collector and a positive electrode active material layer on the positive electrode current collector, wherein the positive electrode active material layer includes the aforementioned composite positive electrode active material.

Some example embodiments provide a rechargeable lithium battery including the aforementioned positive electrode, a negative electrode, and an electrolyte.

The composite positive electrode active material according to some embodiments of the present disclosure maintains competitive pricing for manufacture of a rechargeable lithium battery, promotes high pellet density for the rechargeable lithium battery, provides a high initial charge/discharge capacity for the rechargeable lithium battery, allows the rechargeable lithium battery to have high efficiency, improves an average voltage of the rechargeable lithium battery, provides excellent cycle-life characteristics and high-rate cycle-life characteristics for the rechargeable lithium battery, provides improved low-temperature performance (such as low-temperature capacity and/or low-temperature storage characteristics) for the rechargeable lithium battery, and may even provide low resistance for the rechargeable lithium battery while maintaining a high capacity per volume and a high energy density of the rechargeable lithium battery.

### BRIEF DESCRIPTION OF THE DRAWINGS

FIG. 1 is a schematic perspective view showing a portion of a cylindrical rechargeable lithium battery according to embodiments of the present disclosure.
FIG. 2 is a cross-sectional view schematically illustrating a prismatic rechargeable lithium battery according to embodiments of the present disclosure.
FIGS. 3 and 4 are schematic exploded perspective views of a pouch-type rechargeable lithium battery according to embodiments of the present disclosure.

### DETAILED DESCRIPTION

Hereinafter, specific embodiments will be described in detail so that those of ordinary skill in the art can easily implement them. However, this disclosure may be embodied in many different forms and is not construed as limited to the embodiments set forth herein.

The terminology used herein is used to describe embodiments only and is not intended to limit the present invention. The singular expression includes the plural expression unless the context clearly dictates otherwise.

As used herein, "combination thereof" refers to a mixture, a laminate, a composite, a copolymer, an alloy, a blend, a reaction product, and the like of the constituents.

As used herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, a thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

"Layer" herein includes not only a shape formed on the whole surface when viewed from a plan view, but also a shape formed on a partial surface.

The average particle diameter may be measured by a method well known to those skilled in the art, such as, for example, by a particle size analyzer, or by a transmission electron microscope image or a scanning electron microscope image. Alternatively, it is possible to obtain an average particle diameter value by measuring using a dynamic light scattering method, performing data analysis, counting a number of particles for each particle size range, and calculating the average particle diameter value from these values and data. As used herein, when a definition is not otherwise provided, the average particle diameter may mean a diameter D₅₀ of particles having a cumulative volume of 50 vol% in the particle size distribution. As used herein, when a definition is not otherwise provided, the average particle diameter refers to a diameter D₅₀ of particles having a cumulative volume of 50 vol% in the particle size distribution that is obtained by measuring the size (diameter or long axis length) of 20 particles at random in a scanning electron microscope image, each particle being assumed to have a spherical shape and the measured size being converted into an equivalent spherical diameter.

"Or" is not to be construed as an exclusive meaning; for example, "A or B" is construed to include A, B, A+B, and the like.

"Metal" is interpreted as a concept including ordinary metals, transition metals and metalloids (semi-metals). Within the framework of the present application, the term 'metalloid (semi metal)' means a chemical element selected from the group consisting of B, Si, As, Te, and At. The heavier homologues of each of these metalloids (semi metals) hence represent metals. Likewise, the elements of groups 3-12 of the periodic table represent metals and the elements groups 1 and 2 excluding H (but including Be) are regarded as representing metals.

### Composite Positive Electrode Active Material

Some embodiments provide a composite positive electrode active material including a first positive electrode active material including a lithium iron phosphate-based compound and being in a form of secondary particles in which a plurality of primary particles are agglomerated; a second positive electrode active material including a lithium manganese iron phosphate-based compound and being in a form of secondary particles in which a plurality of primary particles are agglomerated; and a third positive electrode active material including a lithium nickel-based composite oxide. A weight ratio of the first positive electrode active material and the second positive electrode active material may be about 5:1 to about 1:1, the third positive electrode active material may be included in an amount of about 5 wt% to about 25 wt% based on a total of 100 wt% of the composite positive electrode active material, and the secondary particles having a particle diameter of greater than or equal to about 10 µm may be included in an amount of greater than or equal to about 30 vol% based on a total of 100 vol% of the first positive electrode active material and the second positive electrode active material. The first to the third positive electrode active materials may be different from each other. The lithium iron phosphate-based compound, the lithium manganese iron phosphate-based compound, and the lithium nickel-based composite oxide may be different from each other.

Recently, a lithium iron phosphate-based compound that has excellent structural stability, high heat resistance, and price competitiveness has been attracting attention for manufacturers of rechargeable lithium batteries. However, the lithium iron phosphate-based compound has excellent cycle-life characteristics but have the disadvantages of low capacity and energy density.

To compensate for this, there have been attempts to use a mixture of the lithium iron phosphate-based compound and a lithium nickel-based composite oxide to increase capacity. In this case, high energy density may be achieved, but low-temperature performance may be deteriorated.

Conventional rechargeable lithium batteries experience a rapid deterioration in performance at sub-zero temperatures (e.g., -20 °C or lower), and normal operation becomes difficult due to a decrease in discharge capacity and an increase in internal resistance of the rechargeable lithium batteries. Additionally, in low-temperature environments, a viscosity of the electrolyte increases, and thus a diffusion rate of lithium ions within the electrode slows down, which reduces output and may shorten the battery long term cycle-life. Improvement in a low-temperature performance of the rechargeable lithium batteries to address these issues will significantly enhance usability of the rechargeable lithium batteries, enabling stable use in extreme environments such as military equipment, polar research equipment, and satellites. Therefore, development of a rechargeable lithium battery with excellent cycle-life characteristics, high capacity and energy density, and improved low-temperature characteristics is an important research task. For this purpose, the following composite positive electrode active materials are proposed in some embodiments below.

The composite positive electrode active material according to some embodiments includes a first positive electrode active material including a lithium iron phosphate-based compound and being in a form of secondary particles in which a plurality of primary particles are agglomerated. In addition, the composite positive electrode active material includes a second positive electrode active material including a lithium manganese iron phosphate-based compound and being in a form of secondary particles in which a plurality of primary particles are agglomerated. The secondary particles having a particle diameter of greater than or equal to about 10 µm are included in an amount of greater than or equal to about 30 vol% based on a total of 100 vol% of the first positive electrode active material and the second positive electrode active material. In addition, the composite positive electrode active material includes a third positive electrode active material including a lithium nickel-based composite oxide to realize high energy density. A weight ratio of the first positive electrode active material and the second positive electrode active material is from about 5:1 to about 1:1, and the third positive electrode active material is included in an amount from about 5 to about 25 wt% based on a total of 100 wt% of the composite positive electrode active material.

The weight ratio of the first positive electrode active material and the second positive electrode active material is about 5:1 to about 1:1. For example, the weight ratio of the first positive electrode active material to the second positive electrode active material may be from about 4.5:1 to about 1:1, from about 4.0:1 to about 1:1, from about 3.5:1 to about 1:1, from about 3.0:1 to about 1:1, from about 3.0:1 to about 1.1:1, from about 3.0:1 to about 1.2:1, from about 2.8:1 to about 1.3:1, from about 2.6:1 to about 1.4:1, or from about 2.4:1 to about 1.4:1. Additionally, the third positive electrode active material is included in an amount of from about 5 wt% to about 25 wt% based on a total of 100 wt% of the composite positive electrode active material and may be included in an amount of, for example, from about 10 wt% to about 20 wt%, from about 15 wt% to about 25 wt%, from about 5 wt% to about 15 wt%, or from about 13 wt% to about 18 wt%. Within the above composition range, excellent cycle-life characteristics of the battery may be maintained, while the initial capacity and energy density may be improved, and it can also operate stably in low-temperature environments, in particular, it has improved low-temperature capacity.

The secondary particles having the particle diameter of greater than or equal to about 10 µm are included in an amount of greater than or equal to about 30 vol% based on a total of 100 vol% of the first positive electrode active material and the second positive electrode active material. The secondary particles having the particle diameter of greater than or equal to about 10 µm may be included in an amount of greater than or equal to about 30 vol% and less than or equal to about 80 vol%, greater than or equal to about 40 vol% and less than or equal to about 70 vol%, greater than or equal to about 40 vol% and less than or equal to about 60 vol%, or greater than or equal to about 40 vol% and less than or equal to about 50 vol%, based on a total of 100 vol% of the first positive electrode active material and the second positive electrode active material. Within the above ranges, compression characteristics between the positive electrode active material particles are improved, thereby improving the electrode density and thus increasing the energy density. In addition, structural stability is improved, enabling the implementation of excellent cycle-life characteristics along with improved energy density. A method of measuring the ratio of the secondary particles may be, for example, to input positive electrode active material powder into a particle size analyzer to obtain a particle size distribution curve and measure a volume ratio of particles having a particle diameter of greater than or equal to about 10 µm. The particle size analyzer used may be a Beckman Coulter counter LS13 320, and a measurement method may be laser diffraction. The solvent used in the measurement may be isopropyl alcohol (refractive index 1.377).

The composite positive electrode active material may exhibit all of the excellent cycle-life characteristics of a lithium iron phosphate-based compound, the outstanding low-temperature performance of a lithium manganese iron phosphate-based compound, and the excellent capacity and energy density of the lithium nickel-based composite oxide, thereby ensuring stable output characteristics and cycle-life characteristics even in a low-temperature environment. In addition, by controlling the particle size distribution and composition ratio of each positive electrode active material, a balance between energy density, cycle-life characteristics and low-temperature performance may be achieved, resulting in both high performance and price competitiveness.

### First Positive Electrode Active Material

The first positive electrode active material includes a lithium iron phosphate-based compound. The composite positive electrode active material may secure price competitiveness while also having excellent structural stability and thermal stability by including a lithium iron phosphate-based compound as the first positive electrode active material.

The lithium iron phosphate-based compound may be represented by Chemical Formula 1.

[Chemical Formula 1] Liₐ₁Fe₍₁₋ₓ₁₎M¹ₓ₁PO₄

In Chemical Formula 1, 0.90≤a1≤1.5, 0≤x1≤0.4, and M¹ is one or more elements of Al, B, Ca, Ce, Cr, Cu, La, Mg, Mn, Mo, Nb, Ni, Si, Sn, Sr, Ti, V, W, Y, Zn, and Zr. Further, a1 may be 0.90≤a1≤1.5; for example, 0.90≤a1≤1.2 or 0.95≤a1≤1.1. In addition, x1 may be 0≤x1≤0.4, 0≤x1≤0.3, 0≤x1≤0.2, 0≤x1≤0.1, or 0.001≤x1≤0.05.

The lithium iron phosphate-based compound may include LiFePO₄, but the lithium iron phosphate-based compound is not limited thereto.

The lithium iron phosphate-based compound may further include one or more elements of Al, Mg, Ti, and V as a doping element, and the one or more elements of Al, Mg, Ti, and V may be included in an amount from about 0.1 mol% to about 0.5 mol% based on 100 mol% of the total metal, excluding lithium, in the lithium iron phosphate-based compound, and a rate capability and cycle-life characteristics may be improved.

The lithium iron phosphate-based compound may further include one or more elements of Ti and Al as a doping element, and an amount of Ti may be from about 0.1 mol% to about 0.5 mol% based on 100 mol% of a total metal, excluding lithium, and an amount of Al may be from about 0.1 mol% to about 0.5 mol% based on 100 mol% of a total metal, excluding lithium. From the above possible embodiments of lithium iron phosphate-based compound, the rate capability and the cycle-life characteristics of rechargeable lithium battery including the lithium iron phosphate-based compound may be improved.

M¹ of Chemical Formula 1 may include one or more elements of Al, Mg, Ti, and V, in which case cycle-life characteristics of the lithium iron phosphate-based positive electrode active material may be improved. In Chemical Formula 1, one or more elements of Al, Mg, Ti, and V may be included in an amount from about 0.1 mol% to about 0.5 mol%, or from about 0.1 mol% to about 0.3 mol%, based on 100 mol% of the total metal, excluding lithium and cycle-life characteristics of the lithium iron phosphate-based positive electrode active material may be improved. In Chemical Formula 1, x1 may be 0.001≤x1≤0.005, or 0.001≤x1≤0.003.

The lithium iron phosphate-based compound of the first positive electrode active material may not contain manganese or may contain a very small amount of manganese, unlike the lithium manganese iron phosphate-based compound of the second positive electrode active material. In the lithium iron phosphate-based compound, an amount of the manganese may be from about 0 mol% to about 0.01 mol% based on 100 mol% of a total metal, excluding lithium, or may be, for example, about 0 mol%. In Chemical Formula 1, M¹ may be one or more elements of Al, B, Ca, Ce, Cr, Cu, La, Mg, Mo, Nb, Ni, Si, Sn, Sr, Ti, V, W, Y, Zn, and Zr. According to some embodiments, by mixing a first positive electrode active material including a lithium iron phosphate-based compound that does not contain manganese and a second positive electrode active material including a lithium manganese iron phosphate-based compound that contains manganese, it is possible to improve capacity, efficiency, and cycle-life characteristics while simultaneously enhancing low-temperature characteristics.

The first positive electrode active material is in the form of particles and may be secondary particles in which a plurality of primary particles are agglomerated. The secondary particles may have a spherical or ellipsoidal shape as the primary particles are closely agglomerated with each other. The secondary particles may be expressed as an assembly. The composite positive electrode active material according to some embodiments may improve capacity and cycle-life characteristics by including the first positive electrode active material in a form of secondary particles.

An average particle diameter D₅₀ of the secondary particles may be, for example, from about 5 µm to about 25 µm, from about 7 µm to about 20 µm, from about 8 µm to about 15 µm, from about 8 µm to about 12 µm, from about 8 µm to about 10 µm, or from about 8 µm to about 9 µm. An average particle diameter D₅₀ of the primary particles constituting the secondary particles may be from about 0.01 µm to about 2 µm, from about 0.1 µm to about 1.2 µm, or from about 0.5 µm to about 0.9 µm and may be, for example, less than or equal to about 500 nm, for example, from about 10 nm to about 400 nm, from about 20 nm to about 300 nm, or from about 50 nm to about 200 nm. When the average particle diameters of the secondary particles and the primary particles constituting the secondary particles satisfies the above ranges, cycle-life characteristics and energy density may be improved.

The average particle diameter D₅₀ of the secondary particles may be obtained by randomly selecting 30 particles from an electron microscope image of the first positive electrode active material, each particle being assumed to have a spherical shape and the measured size being converted into an equivalent spherical diameter, measuring their particle diameters, and taking the diameter D₅₀ of particles having a cumulative volume of 50 vol% from the particle size distribution as the average particle diameter. The average particle diameter of the primary particles constituting the secondary particles may be obtained by measuring the size (diameter or long axis length) of 30 primary particles in an electron microscope image of the surface or cross-section of the particles and taking the diameter D₅₀ of the particles having a cumulative volume of 50 vol% from the particle size distribution as the average particle diameter.

The secondary particles may have pores, and a porosity, which is a ratio of the area occupied by the pores to the cross-sectional area of the secondary particles, may be from about 20% to about 50%, for example, from about 20% to about 40%, from about 20% to about 30%, or from about 20% to about 25%. The porosity may be a ratio of the area occupied by pores within a secondary particle to the cross-sectional area of the secondary particle measured using an image analysis program (such as Image J, for example) in a scanning electron microscope image of a cross-section of a secondary particle. When the porosity within the secondary particles satisfies the above ranges, the primary particles may be filled between the pores during compression, thereby improving a pellet density, and thereby improving capacity characteristics of the rechargeable lithium battery.

The secondary particles having the particle diameter of greater than or equal to about 10 µm in the first positive electrode active material may be included in an amount of greater than or equal to about 30 vol% based on a total of 100 vol% of the first positive electrode active material. In the first positive electrode active material, the secondary particles having the particle diameter of greater than or equal to about 10 µm may be included in an amount of greater than or equal to about 30 vol% and less than or equal to about 80 vol%, greater than or equal to about 40 vol% and less than or equal to about 70 vol%, greater than or equal to about 40 vol% and less than or equal to about 60 vol%, or greater than or equal to about 40 vol% and less than or equal to about 50 vol%, based on a total of 100 vol% of the first positive electrode active material. Within the above ranges, the energy density of the electrode is high and cycle-life characteristics are improved. A method of measuring a ratio of the secondary particles having the particle diameter of greater than or equal to about 10 µm may include inputting the first positive electrode active material powder into a particle size analyzer to obtain a particle size distribution curve and measure the volume ratio of particles having a particle diameter of greater than or equal to about 10 µm. The particle size analyzer used may be a Beckman Coulter counter LS13 320, and the measurement method may be laser diffraction. The solvent used in the measurement may be isopropyl alcohol (having a refractive index of 1.377).

The first positive electrode active material may further include a carbon coating layer. The carbon coating layer may improve the electrical conductivity of the lithium iron phosphate-based compound and may reduce the resistance of the positive electrode. The carbon coating layer may be provided using one or more raw materials selected from glucose, sucrose, lactose, starch, oligosaccharide, polysaccharide, fructose, cellulose, a polymer of furfuryl alcohol, a block copolymer of ethylene and ethylene oxide, a vinyl resin, a cellulose resin, a phenol resin, a pitch resin, and a tar resin. The carbon coating layer may be provided by placing the raw materials on the surface of the lithium iron phosphate-based compound particles and then by performing a firing process.

The first positive electrode active material may further include a carbon coating layer on the surface of the secondary particles and/or the surface of the primary particles constituting the secondary particles. The carbon coating may be as described above.

The first positive electrode active material may additionally include a form of single particles in addition to a form of the aforementioned secondary particles. An average particle diameter D₅₀ of the single particles including the lithium iron phosphate-based compound may be less than or equal to about 2 µm, for example, from about 100 nm to about 2 µm, from about 200 nm to about 1.5 µm, from about 300 nm to about 1.2 µm, or from about 400 nm to about 1.0 µm. The average particle diameter D₅₀ of the single particles may be smaller than the average particle diameter D₅₀ of the aforementioned secondary particles and may be greater than or equal to the average particle diameter D₅₀ of the primary particles constituting the secondary particles. The average particle diameter of single particles may be obtained by randomly selecting 30 single particles from an electron microscope photograph of the first positive electrode active material, each particle being assumed to have a spherical shape and the measured size being converted into an equivalent spherical diameter, measuring the particle diameter, and taking the diameter D₅₀ of the particles with a cumulative volume of 50 vol% from the particle size distribution as the average particle diameter. The secondary particle may refer to a particle in which more than 10 primary particles are agglomerated to form a distinct particle shape. For example, the secondary particle may be an agglomerate of 50 to several hundred primary particles. Such a structure typically arises when a layered nickel-based positive electrode active material is synthesized via coprecipitation. In contrast, a single particle, as described below, contains no internal grain boundaries and constitutes a single body. Whether a particle is secondary or single can be readily determined through SEM or TEM images of the surface or cross-section of the positive electrode active material.

### Second Positive Electrode Active Material

The second positive electrode active material includes a lithium manganese iron phosphate-based compound. The composite positive electrode active material can secure price competitiveness while also having an excellent rate capability and an excellent low-temperature performance by including a lithium manganese iron phosphate-based compound as a second positive electrode active material.

The lithium manganese iron phosphate-based compound may be represented by Chemical Formula 2.

[Chemical Formula 2] Liₐ₂Mnₓ₂Fe_{(1-x2-y2)}M²_{y2}PO₄

In Chemical Formula 2, 0.90≤a2≤1.5, 0.1≤x2≤0.9, 0≤y2≤0.9, and 0.1≤x2+y2<1, and M² is one or more elements of Al, B, Ca, Ce, Cr, Cu, La, Mg, Mo, Nb, Ni, Si, Sn, Sr, Ti, V, W, Y, Zn, and Zr. Further, a2 may be 0.90≤a2≤1.5, such as, for example, 0.90≤a2≤1.2 or 0.95≤a2≤1.1. In addition, x2 may be 0.1≤x2≤0.9, 0.3≤x2≤0.9, or 0.4≤x2≤0.8, and y2 may be 0≤y2≤0.4, 0≤y2≤0.3, 0≤y2≤0.2, 0≤y2≤0.1, or 0≤y2≤0.05. The lithium manganese iron phosphate-based compound may include one or more compounds of LiMn_{0.7}Fe_{0.3}PO₄, LiMn_{0.6}Fe_{0.4}PO₄, LiMn_{0.3}Fe_{0.3}PO₄, LiMn_{0.4}Fe_{0.6}PO₄, and LiMn_{0.3}Fe_{0.7}PO₄, but the lithium manganese iron phosphate-based compound is not limited thereto.

The lithium manganese iron phosphate-based compound may further include one or more elements of Al, Mg, Ti, and V as a doping element, and the one or more elements of Al, Mg, Ti, and V may be included in an amount from about 0.1 mol% to about 0.5 mol% based on 100 mol% of the total metal, excluding lithium, in the lithium manganese iron phosphate-based compound, and the rate capability and cycle-life characteristics may be improved.

The lithium manganese iron phosphate-based compound may further include one or more elements of Ti and Al as a doping element, and an amount of Ti may be from about 0.1 mol% to about 0.5 mol% based on 100 mol% of a total metal, excluding lithium, and an amount of Al may be from about 0.1 mol% to about 0.5 mol% based on 100 mol% of a total metal, excluding lithium. The rate capability and cycle-life characteristics may be improved.

M² of Chemical Formula 2 may include one or more elements of Al, Mg, Ti, and V, in which case cycle-life characteristics of the lithium manganese iron phosphate-based positive electrode active material may be improved. In Chemical Formula 2, x2 may be 0.001≤x2≤0.005 or 0.001≤x2≤0.003, in which case the cycle-life characteristics of the lithium manganese iron phosphate-based positive electrode active material may be improved.

The second positive electrode active material is in the form of particles and may be secondary particles in which a plurality of primary particles are agglomerated. The secondary particles may have a spherical or ellipsoidal shape as the primary particles are closely agglomerated with each other. Each of the secondary particles may be expressed as an assembly. An average particle diameter D₅₀ of the secondary particles may be, for example, from about 5 µm to about 25 µm, from about 7 µm to about 20 µm, from about 8 µm to about 15 µm, from about 9 µm to about 12 µm, or from about 9 µm to about 10 µm. An average particle diameter D₅₀ of the primary particles constituting the secondary particles may be from about 0.01 µm to about 2 µm, from about 0.1 µm to about 1.2 µm, or from about 0.5 µm to about 0.9 µm and may be less than or equal to about 500 nm, for example, from about 10 nm to about 400 nm, from about 20 nm to about 300 nm, or from about 50 nm to about 200 nm. When the average particle diameters of the secondary particles and the primary particles constituting the secondary particles satisfy the above ranges, cycle-life characteristics and energy density may be improved for the rechargeable lithium battery.

The average particle diameter D₅₀ of the secondary particles may be obtained by randomly selecting 30 particles from an electron microscope image of the second positive electrode active material, each particle being assumed to have a spherical shape and the measured size being converted into an equivalent spherical diameter, measuring their particle diameters, and taking the diameter D₅₀ of particles having a cumulative volume of 50 vol% from the particle size distribution as the average particle diameter. The average particle diameter of the primary particles constituting the secondary particles may be obtained by measuring the size (diameter or long axis length) of 30 primary particles in an electron microscope image of the surface or cross-section of the particles and taking the diameter D₅₀ of the particles having a cumulative volume of 50 vol% from the particle size distribution as the average particle diameter.

The secondary particles may have pores, and a porosity, which is a ratio of the area occupied by the pores to the cross-sectional area of the secondary particles, may be from about 20% to about 50%, for example, from about 20% to about 40%, from about 20% to about 30%, or from about 20% to about 25%. The porosity may be a ratio of the area occupied by pores within a secondary particle to the cross-sectional area of the secondary particle measured using an image analysis program (such as, for example, Image J) in a scanning electron microscope image of a cross-section of a secondary particle. When the porosity within the secondary particles satisfies the above ranges, the primary particles may be filled between the pores during compression, thereby improving the pellet density of the second positive electrode active material comprising the secondary particles, and thereby improving the capacity characteristics of the rechargeable lithium battery.

The secondary particles having the particle diameter of greater than or equal to about 10 µm in the second positive electrode active material may be included in an amount of greater than or equal to about 30 vol% based on a total of 100 vol% of the second positive electrode active material. In the second positive electrode active material, the secondary particles having the particle diameter of greater than or equal to about 10 µm may be included in an amount of greater than or equal to about 30 vol% and less than or equal to about 80 vol%, greater than or equal to about 35 vol% and less than or equal to about 70 vol%, greater than or equal to about 40 vol% and less than or equal to about 60 vol%, or greater than or equal to about 40 vol% and less than or equal to about 50 vol%, based on a total of 100 vol% of the second positive electrode active material. Within the above ranges, the energy density of the electrode is high and cycle-life characteristics of the rechargeable lithium battery are improved. Further, a method of measuring a ratio of the secondary particles having the particle diameter of greater than or equal to about 10 µm may include inputting the second positive electrode active material powder into a particle size analyzer to obtain a particle size distribution curve and measuring the volume ratio of particles having a particle diameter of greater than or equal to about 10 µm. The particle size analyzer used may be a Beckman Coulter counter LS13 320, and the measurement method may be laser diffraction. The solvent used in the measurement may be isopropyl alcohol (refractive index 1.377).

The second positive electrode active material may further include a carbon coating layer. The carbon coating layer may be provided using the same method as the aforementioned first positive electrode active material.

The second positive electrode active material may additionally include a form of single particles in addition to a form of the aforementioned secondary particles. An average particle diameter D₅₀ of the single particles including the lithium manganese iron phosphate-based compound may be less than or equal to about 2 µm, for example, from about 100 nm to about 2 µm, from about 200 nm to about 1.5 µm, from about 300 nm to about 1.2 µm, or from about 400 nm to about 1.0 µm. The average particle diameter D₅₀ of the single particles may be smaller than the average particle diameter D₅₀ of the aforementioned secondary particles and may be greater than or equal to the average particle diameter D₅₀ of the primary particles constituting the secondary particles. The average particle diameter of single particles may be obtained by randomly selecting 30 single particles from an electron microscope photograph of the second positive electrode active material, each particle being assumed to have a spherical shape and the measured size being converted into an equivalent spherical diameter, measuring the particle diameter, and taking the diameter D₅₀ of the particles with a cumulative volume of 50 vol% from the particle size distribution as the average particle diameter.

### Third Positive Electrode Active Material

According to some embodiments, the third positive electrode active material includes a lithium nickel-based composite oxide. The composite positive electrode active material may increase capacity and may enable operation at high voltage by including a lithium nickel-based composite oxide. The lithium nickel-based composite oxide may be represented by Chemical Formula 3.

[Chemical Formula 3] Liₐ₃Niₓ₃M³_{y3}M⁴_{z3}O_{2-b3}X_{b3}

In Chemical Formula 3, 0.9≤a3≤1.8, 0.3≤x3≤1, 0≤y3≤0.7, 0≤z3≤0.7, 0.9≤x3+y3+z3≤1.1, and 0≤b3≤0.1. Further, M³ and M⁴ are each independently one or more elements of Al, B, Ba, Ca, Ce, Co, Cr, Cu, Fe, Mg, Mn, Mo, Nb, Si, Sn, Sr, Ti, V, W, Y, Zn, and Zr, and X is one or more elements of F, P, and S.

In Chemical Formula 3, 0.6≤x3≤1, 0≤y3≤0.4, and 0≤z3≤0.4, or 0.8≤x3≤1, 0≤y3≤0.2, and 0≤z3≤0.2, or 0.9≤x3<1, 0<y3≤0.1, and 0≤z3≤0.1.

The lithium nickel-based composite oxide may represented by Chemical Formula 4 or Chemical Formula 5.

[Chemical Formula 4] Liₐ₄Niₓ₄Co_{y4}M⁵_{z4}O_{2-b4}X_{b4}

In Chemical Formula 4, 0.9≤a4≤1.2, 0.3≤x4<1, 0<y4≤0.7, 0≤z4≤0.7, 0.9≤x4+y4+z4≤1.1, and 0≤b4≤0.1. Further, M⁵ is one or more elements of Al, B, Ba, Ca, Ce, Cr, Cu, Fe, Mg, Mn, Mo, Nb, Si, Sn, Sr, Ti, V, W, Y, Zn, and Zr, and X is one or more elements of F, P, and S.

In Chemical Formula 4, 0.3≤x4≤0.8, 0.1≤y4≤0.6, and 0.1≤z4≤0.6, or 0.3≤x4≤0.6, 0.2≤y4≤0.5, and 0.2≤z4≤0.5, or 0.7≤x4<1, 0.05≤y4≤0.3, and 0.001≤z4≤0.02, or 0.8≤x4≤0.9, 0.1≤y4≤0.2, and 0.008≤z4≤0.012.

[Chemical Formula 5] Liₐ₅Niₓ₅Co_{y5}M⁶_{z5}M⁷_{w5}O_{2-b5}X_{b5}

In Chemical Formula 5, 0.9≤a5≤1.2, 0.3≤x5≤0.98, 0.01≤y5≤0.69, 0.01≤z5≤0.69, 0≤w5≤0.68, 0.9≤x5+y5+z5+w5≤1.1, and 0≤b5≤0.1. Further, M⁶ is one or more elements of Al and Mn, M⁷ is one or more elements of B, Ba, Ca, Ce, Cr, Cu, Fe, Mg, Mo, Nb, Si, Sn, Sr, Ti, V, W, Y, Zn, and Zr, and X is one or more elements of F, P, and S.

In Chemical Formula 5, 0.3≤x5≤0.8, 0.1≤y5≤0.6, 0.1≤z5≤0.6, and 0≤w5≤0.5, or 0.3≤x5≤0.6, 0.2≤y5≤0.5, 0.2≤z5≤0.5, and 0≤w5≤0.3.

The lithium nickel-based composite oxide may be a high nickel-based positive electrode active material. In the lithium nickel-based composite oxide, a nickel amount may be greater than or equal to about 80 mol% based on 100 mol% of the total metal, excluding lithium, and may be, for example, greater than or equal to about 85 mol%, greater than or equal to about 90 mol%, greater than or equal to about 91 mol%, or greater than or equal to about 94 mol%, and less than or equal to about 99 mol%. The high-nickel positive electrode active material may achieve high capacity and high performance.

The third positive electrode active material including the lithium nickel-based composite oxide may include first particles, second particles, or a combination thereof.

The first particles may be in the form of a secondary particle in which a plurality of primary particles are agglomerated, and the second particle may be in the form of secondary particles, single particles, or a combination thereof. The secondary particles and single particles may be spherical, ellipsoidal, polyhedral, or irregularly shaped, and the primary particles constituting the secondary particles may be spherical, ellipsoidal, plate shaped, or a combination thereof.

An average particle diameter D₅₀ of the first particles may be, for example, from about 10 µm to about 25 µm or from about 12 µm to about 18 µm. An average particle diameter D₅₀ of the second particles may be, for example, from about 1 µm to about 8 µm or from about 2 µm to about 5 µm. An average particle diameter D₅₀ of the third positive electrode active material may be from about 1 µm to about 20 µm, from about 5 µm to about 20 µm, or from about 8 µm to about 18 µm. As used herein, the average particle diameter D₅₀ refers to a diameter of particles having a cumulative volume of 50 vol% in the particle size distribution that is obtained by measuring the size (diameter or long axis length) of 20 particles at random in a scanning electron microscope image for positive electrode active materials, each particle being assumed to have a spherical shape and the measured size being converted into an equivalent spherical diameter.

The third positive electrode active material may include from about 40 wt% to about 95 wt% of the first particles and from about 5 wt% to about 60 wt% of the second particles, for example, from about 60 wt% to about 80 wt% of the first particles and from about 20 wt% to about 40 wt% of the second particles based on a total of 100 wt% of the first particles and the second particles. When the first particles and the second particles are mixed and used in the above range in the third positive electrode active material, the energy density and output performance of the rechargeable lithium battery may be improved compared to when using the existing third positive electrode active material having a single particle size, and the cycle-life of the rechargeable lithium battery may be improved, thereby maximizing the efficiency of the rechargeable lithium battery.

The first positive electrode active material may be included in an amount from about 37.5 wt% to about 70 wt%, from about 40 wt% to about 70 wt%, or from about 50 wt% to about 60 wt%, based on a total of 100 wt% of the composite positive electrode active material, and the second positive electrode active material may be included in an amount from about 20 wt% to about 47.5 wt%, from about 25 wt% to about 45 wt%, from about 30 wt% to about 45 wt%, or from about 35 wt% to about 45 wt%, based on a total of 100 wt% of the composite positive electrode active material. A weight ratio of the first positive electrode active material and the second positive electrode active material may be from about 5:1 to about 1:1 and may be, for example, from about 4.5:1 to about 1:1, from about 4.0:1 to about 1:1, from about 3.5:1 to about 1:1, from about 3.0:1 to about 1:1, from about 3.0:1 to about 1.1:1, from about 3.0:1 to about 1.2:1, from about 2.8:1 to about 1.3:1, from about 2.6:1 to about 1.4:1, or from about 2.4:1 to about 1.4:1. The third positive electrode active material may be included in an amount from about 5 wt% to about 20 wt%, from about 5 wt% to about 10 wt%, or from about 10 wt% to about 20 wt% based on a total of 100 wt% of the composite positive electrode active material. Within the above ranges, the composite positive electrode active material may be operated stably at high voltage while being price competitive, may maximize energy density and may also improve low-temperature characteristics and cycle-life characteristics of the rechargeable lithium battery and may realize a high-capacity and high-density battery.

A pellet density of the composite positive electrode active material according to some embodiments may be from about 2.2 g/cc to about 3.0 g/cc, for example, from about 2.2 g/cc to about 2.5 g/cc, from about 2.2 g/cc to about 2.40 g/cc, from about 2.3 g/cc to about 2.40 g/cc or from about 2.34 g/cc to about 2.40 g/cc. When the pellet density of the composite positive electrode active material satisfies the above ranges, high charge/discharge efficiency may be achieved while realizing high capacity per volume. The pellet density may be measured after placing 3 g of the composite positive electrode active material into a mold (area: 1.298 cm²), inserting the mold bar into the mold body, placing the mold set into a hydraulic press, and pressing at a pressure of 4.0 tons for 30 seconds to pelletize.

### Positive Electrode

A positive electrode according to some embodiments includes a positive electrode current collector and a positive electrode active material layer disposed on the positive electrode current collector, the positive electrode active material layer including the aforementioned composite positive electrode active material. The positive electrode according to some embodiments may improve overall performance of the rechargeable lithium battery by including the aforementioned composite positive electrode active material, and specifically, may improve low-temperature performance and may exhibit high capacity, high efficiency, high energy density, and excellent cycle-life characteristics.

### Positive Electrode Current Collector

The positive electrode current collector is not particularly limited as long as the positive electrode current collector has conductivity and does not cause a chemical change in the rechargeable lithium battery, and the positive electrode current collector may be an aluminum foil or a stainless steel foil having a thickness from about 10 µm to about 15 µm.

### Positive Electrode Active Material Layer

The positive electrode active material layer includes the aforementioned composite positive electrode active material.

The specific details of the composite positive electrode active material are the same as described above and, thus, are omitted below.

An amount of the composite positive electrode active material may be from about 60 wt% to about 99.9 wt%, from about 70 wt% to about 99.8 wt%, from about 80 wt% to about 99 wt%, or from about 90 wt% to about 98 wt% based on 100 wt% of the positive electrode active material layer.

The positive electrode active material layer may optionally further include a binder, a conductive material, or a combination thereof.

The binder may serve to adhere the positive electrode active material particles well to each other and also to adhere the positive electrode active material well to the current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, polyester resin, nylon, and the like, but the binder is not limited thereto.

The conductive material is included to provide electrode conductivity, and any electrically conductive material may be used as a conductive material unless it causes a chemical change in a battery. Examples of the conductive material may include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

In the positive electrode active material layer, an amount of the binder may be from about 0.1 wt% to about 5 wt% based on 100 wt% of the positive electrode active material layer, and an amount of the conductive material may be from about 0.1 wt% to about 5 wt% based on 100 wt% of the positive electrode active material layer.

A density of the positive electrode active material layer may be from about 2.2 g/cc to about 3.0 g/cc, for example, from about 2.2 g/cc to about 2.5 g/cc, from about 2.2 g/cc to about 2.40 g/cc, from about 2.3 g/cc to about 2.40 g/cc or from about 2.34 g/cc to about 2.40 g/cc. When the density of the positive electrode active material layer satisfies the above ranges, high charge/discharge efficiency may be achieved while realizing a high capacity per volume. The density of the positive electrode active material layer means a ratio of a weight to a volume of the positive electrode active material layer in the compressed positive electrode. The density of the positive electrode active material layer may be obtained by measuring a cross-sectional area, a thickness, and the weight of the positive electrode active material layer excluding the positive electrode current collector, then calculating the volume by multiplying the cross-sectional area and thickness, and then dividing the weight by the volume.

### Rechargeable Lithium Battery

A rechargeable lithium battery according to some embodiments includes the aforementioned positive electrode, a negative electrode, and an electrolyte. Further, the rechargeable lithium battery may include the positive electrode, the negative electrode, the electrolyte, and a separator between the positive electrode and the negative electrode.

The rechargeable lithium battery may be cylindrical, prismatic, pouch shaped, coin shaped, etc. depending on a shape of the rechargeable lithium battery.

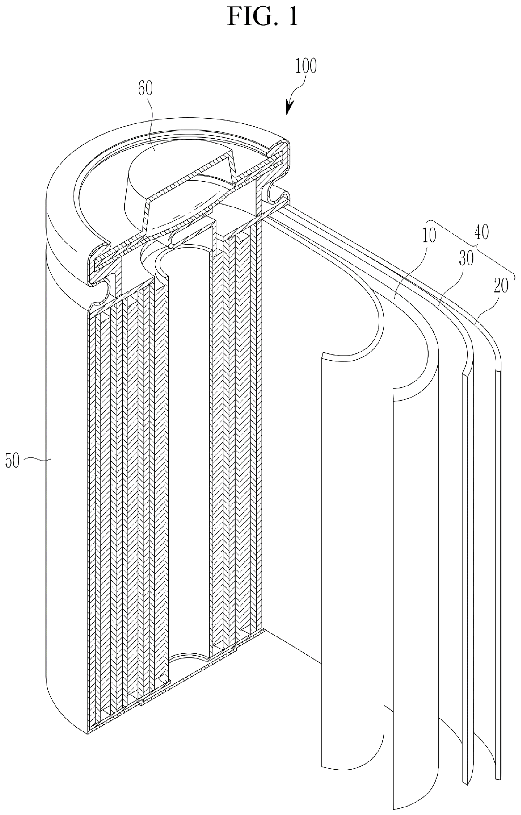

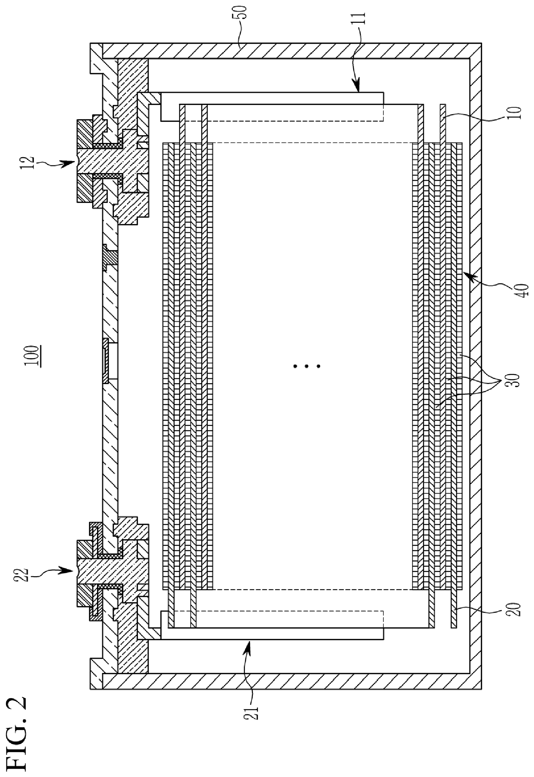

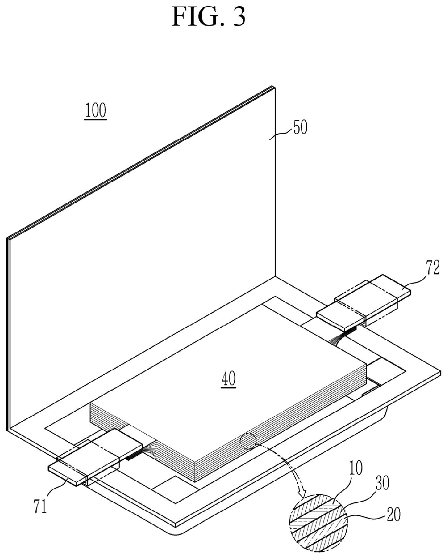

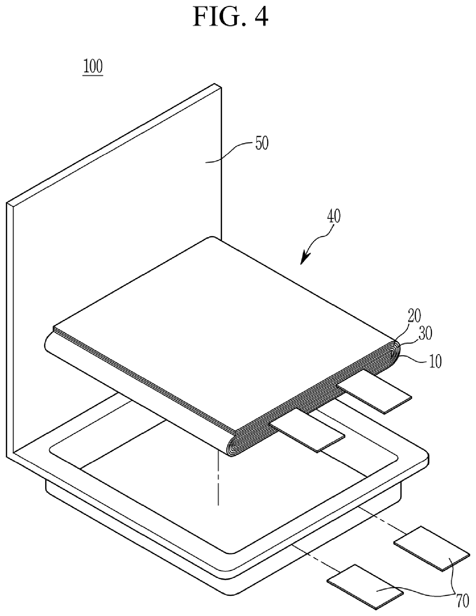

FIGS. 1 to 4 are schematic views each showing a rechargeable lithium battery according to some embodiments of the present disclosure, where FIG. 1 shows a cylindrical battery, FIG. 2 shows a prismatic battery, and FIGS. 3 and 4 each show a pouch-shaped battery.

Particularly, FIG. 1 is a schematic perspective view showing a part of a cylindrical rechargeable lithium battery according to some embodiments of the present disclosure, the cylindrical rechargeable lithium battery being cut open. FIG. 2 is a cross-sectional view schematically showing a prismatic rechargeable lithium battery according to some embodiments of the present disclosure. FIGS. 3 and 4 each are schematic exploded perspective views of a pouch-type rechargeable lithium battery according to some embodiments of the present disclosure.

The rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte (not shown). The rechargeable lithium battery 100 may include a sealer 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70 or, particularly, a positive electrode tab 71 and a negative electrode tab 72 serving as an electrical path for inducing the current formed in the electrode assembly 40 to the outside.

### Negative Electrode

A negative electrode for a rechargeable lithium battery includes a negative electrode current collector and a negative electrode active material layer on the negative electrode current collector. The negative electrode active material layer includes a negative electrode active material and may optionally further include a binder, a conductive material, or a combination thereof.

The negative electrode current collector is not particularly limited as long as it has conductivity without causing chemical changes in the rechargeable lithium battery and may be a copper foil having a thickness from about 10 µm to about 15 µm.

The negative electrode active material includes a material capable of reversibly intercalating and deintercalating lithium ions, lithium metal, an alloy of lithium metal, a material capable of doping and dedoping lithium, or a transition metal oxide.

The material capable of reversibly intercalating and deintercalating the lithium ions may be a carbon-based negative electrode active material, such as, for example, crystalline carbon, amorphous carbon, or a combination thereof. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

As the lithium metal alloy, an alloy of lithium and a metal selected from Na, K, Rb, Cs, Fr, Be, Mg, Ca, Sr, Si, Sb, Pb, In, Zn, Ba, Ra, Ge, Al, and Sn may be used.

The material capable of doping and dedoping lithium may be a Si-based negative electrode active material or a Sn-based negative electrode active material. The Si-based negative electrode active material may be silicon, a silicon-carbon composite, SiOₓ (0<x≤2), a Si-Q alloy (wherein Q is an element selected from an alkali metal, an alkaline earth metal, a Group 13 element, a Group 14 element (excluding Si), a Group 15 element, a Group 16 element, a transition metal, a rare earth element, and a combination thereof and, for example, Q may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be Sn, SnO₂, a Sn alloy, or a combination thereof.

The silicon-carbon composite may be a composite of silicon and amorphous carbon. The average particle diameter D₅₀ of the silicon-carbon composite particles may be, for example, from about 0.5 µm to about 20 µm. According to some embodiments, the silicon-carbon composite may be in the form of silicon particles and amorphous carbon coated on a surface of the silicon particles. The silicon-carbon composite may include a secondary particle (core) in which silicon primary particles are assembled and an amorphous carbon coating layer (shell) on the surface of the secondary particle. The amorphous carbon may also be present between the silicon primary particles. In some embodiments, the silicon primary particles may be coated with amorphous carbon. The secondary particles may exist dispersed in an amorphous carbon matrix.

The silicon-carbon composite may further include crystalline carbon. The silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, calcined coke, and the like.

When the silicon-carbon composite includes silicon and amorphous carbon, an amount of the silicon may be from about 10 wt% to about 50 wt%, and an amount of the amorphous carbon may be from about 50 wt% to about 90 wt% based on 100 wt% of the silicon-carbon composite. In addition, when the silicon-carbon composite includes silicon, amorphous carbon, and crystalline carbon, an amount of silicon may be from about 10 wt% to about 50 wt%, an amount of crystalline carbon may be from about 10 wt% to about 70 wt%, and an amount of amorphous carbon may be from about 20 wt% to about 40 wt% based on 100 wt% of the silicon-carbon composite.

Additionally, a thickness of the amorphous carbon coating layer may be from about 5 nm to about 100 nm. An average particle diameter D₅₀ of the silicon particles (primary particles) may be from about 10 nm to about 1 µm, or from about 10 nm to about 200 nm. The silicon particles may be present as silicon alone, in the form of a silicon alloy, or in an oxidized form. The oxidized form of the silicon may be represented as SiOₓ (0<x≤2). An atomic ratio of Si:O, which indicates the degree of oxidation, may be from about 99:1 to about 33:67. As used herein, when a definition is not otherwise provided, an average particle diameter D₅₀ indicates a diameter of a particle where an accumulated volume is about 50 vol% in a particle size distribution.

The Si-based negative electrode active material or Sn-based negative electrode active material may be mixed with the carbon-based negative electrode active material. When using a mixture of a Si-based negative electrode active material or a Sn-based negative electrode active material and a carbon-based negative electrode active material, the mixing ratio may be from about 1:99 to about 90:10 by weight.

The negative electrode active material may be included in an amount from about 90 wt% to about 99.8 wt% or from about 94 wt% to about 99 wt%, based on 100 wt% of the negative electrode active material layer.

The binder serves to well adhere the negative electrode active material particles to each other and also to adhere the negative electrode active material to the current collector. The binder may be a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber and may be, for example, polytetrafluoroethylene, polyvinylidene fluoride, a polyvinylidene fluoride-hexafluoropropylene copolymer, polyethylene oxide, or a combination thereof.

The conductive material is included to provide electrode conductivity and any electrically conductive material may be used as a conductive material unless the electrically conductive material causes a chemical change. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

An amount of the binder may be from about 0.1 wt% to about 5 wt% based on 100 wt% of the negative electrode active material layer, and an amount of the conductive material may be from about 0.1 wt% to about 5 wt% based on 100 wt% of the negative electrode active material layer.

### Electrolyte

An electrolyte for a rechargeable lithium battery is an electrolyte solution and includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, t-butyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. The ketone-based solvent may include cyclohexanone, and the like. The alcohol-based solvent may include ethanol, isopropyl alcohol, and the like, and the aprotic solvent may include nitriles such as R-CN (wherein R is a C2 to C20 linear, branched, or cyclic hydrocarbon group, and may include a double bond, an aromatic ring, or an ether group, and the like; amides such as dimethylformamide; dioxolanes such as 1,3-dioxolane, 1,4-dioxolane, and the like); sulfolanes; and the like.

The non-aqueous organic solvent may be used alone or in combination of two or more, and, when two or more types are used in combination, the mixing ratio may be appropriately adjusted depending on intended performance of the rechargeable lithium batteries.

When using a carbonate-based solvent, a cyclic carbonate and a chain carbonate may be mixed and used, and the cyclic carbonate and the chain carbonate may be mixed in a volume ratio from about 1:1 to about 1:9.

The non-aqueous organic solvent may further include an aromatic hydrocarbon-based organic solvent. A carbonate-based solvent and an aromatic hydrocarbon-based organic solvent may be mixed and used in a volume ratio from about 1:1 to about 30:1.

The electrolyte solution may further include vinylethylene carbonate, vinylene carbonate, or an ethylene carbonate-based compound to improve the cycle-life of the rechargeable lithium battery.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, LiSbF₆, LiAsF₆, LiClO₄, LiAlO₂, LiAlCl₄, LiPO₂F₂, LiCl, LiI, LiN(SO₂C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers from 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte solution has appropriate ionic conductivity and viscosity. Thus, the rechargeable lithium battery may perform well, and lithium ions may move effectively.

### Separator

Depending on the type of rechargeable lithium battery, a separator may exist between the positive and negative electrodes. The separator may include polyethylene, polypropylene, polyvinylidene fluoride, or a multilayer film of two or more layers and may be a mixed multilayer film such as a polyethylene/polypropylene two-layer separator, a polyethylene/polypropylene/polyethylene three-layer separator, or a polypropylene/polyethylene/polypropylene three-layer separator.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, and polytetrafluoroethylene (PTFE; TEFLON^{™}), or a copolymer or mixture of two or more thereof. The porous substrate may include glass fibers, or may comprise a composite membrane of polymer and glass fibers.

The porous substrate may have a thickness from about 1 µm to about 40 µm, for example, from about 1 µm to about 30 µm, from about 1 µm to about 20 µm, from about 5 µm to about 15 µm, or from about 10 µm to about 15 µm.

The organic material may include a (meth)acrylic copolymer including a first structural unit derived from (meth)acrylamide and a second structural unit including a structural unit derived from (meth)acrylic acid or (meth)acrylate and/or a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, Ga₂0₃, ZnO, ZrO₂, Y₂O₃, SrTiO₃, BaTiO₃, Mg(OH)₂, boehmite, or a combination thereof, but the inorganic material is not limited thereto. An average particle diameter D₅₀ of the inorganic particles may be from about 1 nm to about 2000 nm, for example, from about 100 nm to about 1000 nm, or from about 100 nm to about 700 nm.

The organic material and the inorganic material may be mixed in one coating layer, or a coating layer including an organic material and a coating layer including an inorganic material may be stacked.

A thickness of the coating layer may be from about 0.5 µm to about 20 µm, for example, from about 1 µm to about 10 µm, or from about 1 µm to about 5 µm.

Hereinafter, examples and comparative examples of the present invention are described. However, the examples described below are only some embodiments of the present invention, and the present invention is not limited to the examples described below.

### Preparation Example 1-1: Preparation of First Positive Electrode Active Material

FePO₄ as an iron phosphate-based precursor and Li₂CO₃ as a lithium raw material were added to water as a solvent and then wet-milled to prepare a slurry. At this time, FePO₄ and Li₂CO₃ were mixed so that a molar ratio of Fe:Li was 1:1. The wet-milled slurry was fed into a spraying device at a feeding rate of 0.5 kg/min based on a total amount of raw material (iron phosphate-based precursor and lithium raw material) and then spray-dried at 250°C and sintered at 750°C for 8 hours to obtain a sintered product. The sintered product was pulverized at 5000 rpm by using a jet mill pulverizer and then filtered, de-ironized, and packaged to prepare a first positive electrode active material.

The first positive electrode active material was the lithium iron phosphate-based compound (LiFePO₄) in the form of secondary particles in which a plurality of primary particles (average particle diameter D₅₀ of the primary particles: about 100 nm to about 300 nm) were agglomerated and had an average particle diameter D₅₀ of 8 µm. The first positive electrode active material included 30 vol% of particles having a diameter of greater than or equal to about 10 µm based on a total of 100 vol% of the first positive electrode active material. The ratio of the secondary particles having the particle diameter of greater than or equal to about 10 µm was measured by inputting the first positive electrode active material powder into a particle size analyzer to obtain a particle size distribution curve and then measuring a volume of the particles having a particle diameter of greater than or equal to about 10 µm. The particle size analyzer used was Beckman Coulter counter LS13 320, and the measurement was performed via a laser diffraction method. The solvent used in the measurement was isopropyl alcohol (having a refractive index of 1.377).

### Preparation Example 1-2: Preparation of First Positive Electrode Active Material

A first positive electrode active material was prepared in the same manner as in Preparation Example 1-1 except that, by adjusting a spray pressure during spray-drying, the first positive electrode active material was a lithium iron phosphate-based compound (LiFePO₄) in the form of secondary particles in which a plurality of primary particles were agglomerated, had an average particle diameter D₅₀ of 8.3 µm, and included 40 vol% of particles having a particle diameter of greater than or equal to about 10 µm based on a total of 100 vol% of the first positive electrode active material.

### Preparation Example 1-3: Preparation of First Positive Electrode Active Material

A first positive electrode active material was prepared in the same manner as in Preparation Example 1-1 except that, by adjusting a spray pressure during spray-drying, the first positive electrode active material was a lithium iron phosphate-based compound (LiFePO₄) in the form of secondary particles in which a plurality of primary particles were agglomerated, had an average particle diameter D₅₀ of 10 µm, and included 50 vol% of particles having a particle diameter of greater than or equal to about 10 µm based on a total of 100 vol% of the first positive electrode active material.

### Comparative Preparation Example 1-4: Preparation of First Positive Electrode Active Material

A first positive electrode active material was prepared in the same manner as in Preparation Example 1-1 except that, by adjusting a spray pressure during spray-drying, the first positive electrode active material was a lithium iron phosphate-based compound (LiFePO₄) in the form of secondary particles in which a plurality of primary particles were agglomerated, had an average particle diameter D₅₀ of 7.6 µm, and included 20 vol% of particles having a particle diameter of greater than or equal to about 10 µm based on a total of 100 vol% of the first positive electrode active material.

### Preparation Example 2-1: Preparation of Second Positive Electrode Active Material

FePO₄ (used as an iron phosphate-based precursor), MnCO₃ (used as a manganese raw material), and Li₂CO₃ (used as a lithium raw material) were added to water as a solvent and then wet-milled to prepare a slurry. At this time, FePO₄, MnCO₃, and Li₂CO₃ were mixed so that a molar ratio of Fe:Mn:Li was 1:1:1. The wet-milled slurry was injected into a spraying device at a feeding rate of 0.5 kg/min based on a total amount of raw material (iron phosphate-based precursor, manganese raw material, and lithium raw material) and then was spray-dried at 250°C and was sintered at 750°C for 8 hours to obtain a sintered product. The sintered product was pulverized at a pulverization speed of 5000 rpm by using a jet mill pulverizer, was filtered, was de-ironized, and was packaged to prepare a second positive electrode active material.

The second positive electrode active material was the lithium manganese iron phosphate-based compound (LiMnFePO₄) in the form of secondary particles in which a plurality of primary particles (average particle diameter D₅₀ of the primary particles: about 50 nm to about 150 nm) were agglomerated and had an average particle diameter D₅₀ of 9 µm. The second positive electrode active material included 30 vol% of particles having a particle diameter of greater than or equal to about 10 µm based on a total of 100 vol% of the second positive electrode active material.

### Preparation Example 2-2: Preparation of Second Positive Electrode Active Material

A second positive electrode active material was prepared in the same manner as in Preparation Example 2-1, except that, by adjusting a spray pressure during spray-drying, the second positive electrode active material was a lithium manganese iron phosphate-based compound (LiMnFePO₄) in the form of secondary particles in which a plurality of primary particles were agglomerated, had an average particle diameter D₅₀ of 9.3 µm, and included 40 vol% of particles having a particle diameter of greater than or equal to about 10 µm based on a total of 100 vol% of the second positive electrode active material.

### Preparation Example 2-3: Preparation of Second Positive Electrode Active Material

A second positive electrode active material was prepared in the same manner as in Preparation Example 2-1, except that, by adjusting a spray pressure during spray-drying, the second positive electrode active material was a lithium manganese iron phosphate-based compound (LiMnFePO₄) in the form of secondary particles in which a plurality of primary particles were agglomerated, had an average particle diameter D₅₀ of 10 µm, and included 50 vol% of particles having a particle diameter of greater than or equal to about 10 µm based on a total of 100 vol% of the second positive electrode active material.

### Comparative Preparation Example 2-4: Preparation of Second Positive Electrode Active Material

A second positive electrode active material was prepared in the same manner as in Preparation Example 2-1, except that, by adjusting a spray pressure during spray-drying, the second positive electrode active material was a lithium manganese iron phosphate-based compound (LiMnFePO₄) in the form of secondary particles in which a plurality of primary particles were agglomerated, had an average particle diameter D₅₀ of 8.7 µm, and included 20 vol% of particles having a particle diameter of greater than or equal to about 10 µm based on a total of 100 vol% of the second positive electrode active material.

### Preparation Example 3: Preparation of Third Positive Electrode Active Material

A third positive electrode active material (a lithium nickel-based composite oxide) was prepared by mixing first particles (having a composition of Li_{1.05}Ni_{0.85}Co_{0.14}Al_{0.01}O₂ and an average particle diameter D₅₀ of 15 µm in the form of secondary particles in which a plurality of primary particles are agglomerated) and second particles (having a composition of Li_{1.05}Ni_{0.85}Co_{0.14}Al_{0.01}O₂ and an average particle diameter D₅₀ of 4 µm in the form of single particles) in a weight ratio of 7:3.

### Example 1

### (1) Manufacturing of Positive Electrode

The lithium iron phosphate-based compound of Preparation Example 1-2 (added as a first positive electrode active material), the lithium manganese iron phosphate-based compound of Preparation Example 2-2 (added as a second positive electrode active material), and the lithium nickel-based composite oxide of Preparation Example 3 (added as a third positive electrode active material) were included. A composite positive electrode active material was prepared by mixing 60 wt% of the first positive electrode active material, 25 wt% of the second positive electrode active material, and 15 wt% of the third positive electrode active material based on a total of 100 wt% of the composite positive electrode active material.

The composite positive electrode active material was mixed with polyvinylidene fluoride as a binder and carbon nanotube as a conductive material in a weight ratio of 97:1:2 (which is a ratio set forth as positive electrode active material:binder:conductive material) to prepare a positive electrode active material composition. This composition was dispersed in an N-methyl pyrrolidone solvent to prepare a positive electrode active material slurry, which was coated on a 13.5 µm-thick Al foil and then dried and compressed to manufacture a positive electrode.

### (2) Manufacturing of Rechargeable Lithium Battery Cell

97.5 wt% of graphite (added as a negative electrode active material), 1.5 wt% of carboxymethyl cellulose (added as a binder), and 1 wt% of styrene butadiene rubber were dispersed in distilled water to prepare a negative electrode active material slurry. This slurry was coated on a 10µm-thick Cu foil and then dried and compressed to manufacture a negative electrode.

Between the positive electrode and the negative electrode, a 10µm-thick polyethylene separator was disposed to manufacture an electrode assembly, which was inserted into a case, and an electrolyte was injected into the electrode assembly to manufacture a rechargeable lithium battery cell (a pouch cell of 100 mAh level). The electrolyte was prepared by mixing EC (ethylenecarbonate):EMC (ethylmethylcarbonate):DMC (dimethylcarbonate) in a volume ratio of 2:4:4 and dissolving 1.15 M LiPF₆ in the mixed solvent.

### Example 2

The lithium iron phosphate-based compound of Preparation Example 1-2 (added as a first positive electrode active material), the lithium manganese iron phosphate-based compound of Preparation Example 2-2 (added as a second positive electrode active material), and the lithium nickel-based composite oxide of Preparation Example 3 (added as a third positive electrode active material) were included. A positive electrode and a rechargeable lithium battery cell were manufactured in the same manner as in Example 1, except that 50 wt% of the first positive electrode active material, 35 wt% of the second positive electrode active material, and 15 wt% of the third positive electrode active material based on a total of 100 wt% of a composite positive electrode active material were used to prepare the composite positive electrode active material.

### Comparative Example 1

The lithium iron phosphate-based compound of Preparation Example 1-2 (added as a first positive electrode active material) and the lithium nickel-based composite oxide of Preparation Example 3 (added as a third positive electrode active material) were included. A positive electrode and a rechargeable lithium battery cell were manufactured in the same manner as in Example 1, except that 85 wt% of the first positive electrode active material and 15 wt% of the third positive electrode active material based on a total of 100 wt% of a composite positive electrode active material were used to prepare the composite positive electrode active material.

### Comparative Example 2

The lithium manganese iron phosphate-based compound of Preparation Example 2-2 (added as a second positive electrode active material) and the lithium nickel-based composite oxide of Preparation Example 3 (added as a third positive electrode active material) were used. A positive electrode and a rechargeable lithium battery cell were manufactured in the same manner as in Example 1, except that 85 wt% of the second positive electrode active material and 15 wt% of the third positive electrode active material based on a total of 100 wt% of a composite positive electrode active material were used to prepare the composite positive electrode active material.

### Comparative Example 3

The lithium iron phosphate-based compound of Comparative Preparation Example 1-4 (added as a first positive electrode active material), the lithium manganese iron phosphate-based compound of Comparative Preparation Example 2-4 (added as a second positive electrode active material), and the lithium nickel-based composite oxide of Preparation Example 3 (added as a third positive electrode active material) were included. A positive electrode and a rechargeable lithium battery cell were manufactured in the same manner as in Example 1, except that 60 wt% of the first positive electrode active material, 25 wt% of the second positive electrode active material, and 15 wt% of the third positive electrode active material based on a total of 100 wt% of a composite positive electrode active material were used to prepare the composite positive electrode active material.

### Comparative Example 4

The lithium iron phosphate-based compound of Preparation Example 1-2 (added as a first positive electrode active material), the lithium manganese iron phosphate-based compound of Preparation Example 2-2 (added as a second positive electrode active material), and the lithium nickel-based composite oxide of Preparation Example 3 (added as a third positive electrode active material) were included. A positive electrode and a rechargeable lithium battery cell were manufactured in the same manner as in Example 1, except that 40 wt% of the first positive electrode active material, 45 wt% of the second positive electrode active material, and 15 wt% of the third positive electrode active material based on a total of 100 wt% of a composite positive electrode active material were used to prepare the composite positive electrode active material.

### Comparative Example 5

The lithium iron phosphate-based compound of Preparation Example 1-2 (added as a first positive electrode active material), the lithium manganese iron phosphate-based compound of Preparation Example 2-2 (added as a second positive electrode active material), and the lithium nickel-based composite oxide of Preparation Example 3 (added as a third positive electrode active material) were included. A positive electrode and a rechargeable lithium battery cell were manufactured in the same manner as in Example 1, except that 30 wt% of the first positive electrode active material, 55 wt% of the second positive electrode active material, and 15 wt% of the third positive electrode active material based on a total of 100 wt% of a composite positive electrode active material were used to prepare the composite positive electrode active material.

### Comparative Example 6

The lithium iron phosphate-based compound of Preparation Example 1-2 (added as a first positive electrode active material), the lithium manganese iron phosphate-based compound of Preparation Example 2-2 (added as a second positive electrode active material), and the lithium nickel-based composite oxide of Preparation Example 3 (added as a third positive electrode active material) were included. A positive electrode and a rechargeable lithium battery cell were manufactured in the same manner as in Example 1, except that 65 wt% of the first positive electrode active material, 20 wt% of the second positive electrode active material, and 15 wt% of the third positive electrode active material based on a total of 100 wt% of a composite positive electrode active material were used to prepare the composite positive electrode active material.

### Evaluation Example 1: Evaluation of Performance of First Positive Electrode Active Material Battery Cell

A performance of a rechargeable lithium battery cell of each of the positive electrodes respectively including 100 wt% of the first positive electrode active material of Preparation Examples 1-1, 1-2, and 1-3 and of Comparative Preparation Example 1-4 (hereinafter, referred to as rechargeable lithium battery cells of Preparation Examples 1-1, 1-2, and 1-3 and Comparative Preparation Example 1-4) was evaluated. The positive electrodes and rechargeable lithium battery cells were manufactured in the same manner as in Example 1, except for including 100 wt% of the first positive electrode active material.

### (1) Evaluation of Initial Charge/discharge Capacity and Efficiency

The rechargeable lithium battery cells of Preparation Examples 1-1, 1-2, and 1-3 and of Comparative Preparation Example 1-4 including the first positive electrode active material were charged to a voltage of 3.8 V at a 0.2 C-rate and discharged to a cut-off voltage of 2.5 V at the 0.2 C-rate at 25°C to measure initial charge/discharge capacity, which was used to calculate initial efficiency according to Equation 1. The results are shown in Table 1. [Equation 1] 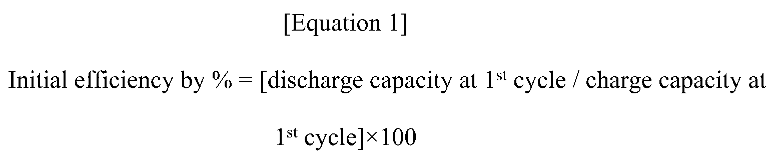 Initial efficiency by % = [discharge capacity at 1st cycle / charge capacity at 1st cycle]×100

### (2) Average Voltage and Energy Density

The rechargeable lithium battery cells of Preparation Examples 1-1, 1-2, and 1-3 and of Comparative Preparation Example 1-4 including the first positive electrode active material were measured with respect to an average voltage at SOC (State of Charge) 50% during the initial discharge to calculate energy density according to Equation 2, and the results are shown in Table 1. The current density (milliampere-hour per square centimeter (mAh/cm²)) in Equation 2 was calculated from a value obtained by dividing the total current passing through the cells by the geometric area of the electrodes of the cells. [Equation 2] 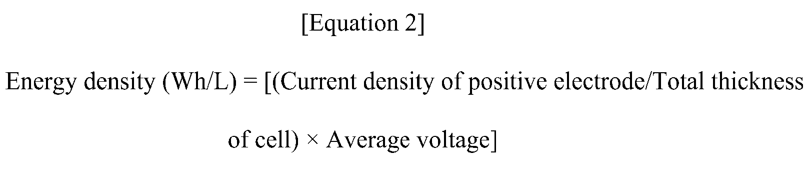 Energy density (Wh/L) = [(Current density of positive electrode/Total thickness of cell) × Average voltage]

### (3) Evaluation of Low-temperature Capacity

The rechargeable lithium battery cells of Preparation Examples 1-1, 1-2, and 1-3 and of Comparative Preparation Example 1-4 including first positive electrode active material were fully charged to a voltage of 3.8 V at the 0.2 C-rate and discharged to a cut-off voltage of 2.5 V at the 0.2 C-rate at 25 °C in a thermostatic bath which was set at - 20°C to measure low temperature discharge capacity. The results are shown in Table 1.

### (4) Evaluation of Cycle-life Characteristics

After the rechargeable lithium battery cells of Preparation Examples 1-1, 1-2, and 1-3 and of Comparative Preparation Example 1-4 including the first positive electrode active material were subjected to the initial charge and discharge (i.e., the 1^{st} cycle) as described above, they were subjected to 49 times or more charge and discharge cycles under the same conditions as the initial charge and discharge (that is, they were 49 times or more repeatedly charged to a voltage of 3.8 V at 0.2 C-rate and discharged to a cut-off voltage of 2.5 V at 0.2 C-rate at 25°C), so that the total number of the charge and discharge cycles including the 1^{st} cycle was 50 or more. Then, a ratio of 50^{th} discharge capacity to the initial discharge capacity was calculated as cycle-life according to Equation 3, and the results are shown in Table 1. [Equation 3] 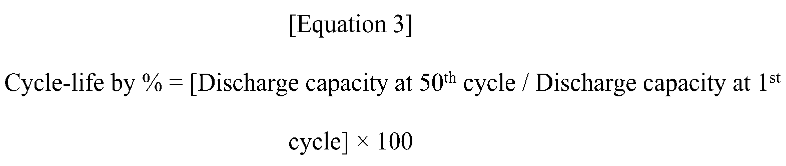 Cycle-life by % = [Discharge capacity at 50th cycle / Discharge capacity at 1st cycle] × 100

### (5) Evaluation of DC Internal Resistance (DC-IR)

The rechargeable lithium battery cells of Preparation Examples 1-1, 1-2, and 1-3 and of Comparative Preparation Example 1-4 including the first positive electrode active material were charged and discharge at a 1 C rate to SOC 50% for 10 seconds to obtain a charge voltage and a discharge voltage, which was used to calculate DC-IR.

**Table 1:**

| | Initial charge capacity (mAh /g) | Initial discharge capacity (mAh /g) | Initial efficiency (%) | Average voltage (V) | Cycle life (%) | Energy density (Wh/L) | Low-temperature capacity @-(mAh/g) 20°C | DC-IR (Ω) | Pellet density (g/cc) |
|---|---|---|---|---|---|---|---|---|---|
| Preparation Example 1-1 | 160.8 | 156.2 | 97.1 | 3.20 | 100.1 | 1086 | 82.1 | 15.8 | 2.17 |
| Preparation Example 1-2 | 161.9 | 157.3 | 97.2 | 3.20 | 100.1 | 1107 | 84.6 | 15.4 | 2.30 |
| Preparation Example 1-3 | 161.5 | 156.9 | 97.2 | 3.20 | 100.0 | 1099 | 84.4 | 15.4 | 2.28 |
| Comparative Preparation Example 1-4 | 160.0 | 155.2 | 97.0 | 3.20 | 100.0 | 1068 | 79.5 | 16.2 | 2.15 |

Referring to Table 1, the rechargeable lithium battery cells of Preparation Examples 1-1, 1-2, and 1-3, of which the first positive electrode active material included 30 vol% or more of particles having a particle diameter of greater than or equal to about 10 µm based on a total of 100 vol% of the first positive electrode active material, exhibited high initial charge capacity and discharge capacity, improved initial efficiency, excellent cycle life, increased energy density, improved low-temperature capacity, and reduced internal resistance and, thus, overall improved performance of the rechargeable lithium battery. Accordingly, an overall performance of the rechargeable lithium battery was improved when preparing the composite positive electrode active materials such that the first positive electrode active material has 30 vol% or more particles having a particle diameter of greater than or equal to about 10 µm based on a total of 100 vol% of the first positive electrode active material.

### Evaluation Example 2: Evaluation of Performance of Second Positive Electrode Active Material Battery Cell

A performance of a rechargeable lithium battery cell of each of the positive electrodes respectively including 100 wt% of the second positive electrode active material of Preparation Examples 2-1, 2-2, and 2-3 and of Comparative Preparation Example 2-4 (hereinafter, referred to as rechargeable lithium battery cells of Preparation Examples 2-1, 2-2, and 2-3 and Comparative Preparation Example 2-4) was evaluated. The positive electrodes and rechargeable lithium battery cells were manufactured in the same manner as in Example 1, except that 100 wt% of the second positive electrode active material was used.

The rechargeable lithium battery cell of Preparation Examples 2-1, 2-2, and 2-3 and of Comparative Preparation Example 2-4 including the second positive electrode active material were evaluated with respect to initial charge and discharge capacity, initial efficiency, average voltage, energy density, low-temperature capacity, cycle-life characteristics, and DC internal resistance in the same manner as in Evaluation Example 1, except that they were charged to a battery voltage of 4.45 V at a 0.2 C-rate and discharged to a cut-off voltage of 2.5 V at the 0.2 C-rate at 25°C, instead of being charged to a voltage of 3.8 V at a 0.2 C-rate and discharged to a cut-off voltage of 2.5 V at the 0.2 C-rate at 25°C, and the results are shown in Table 2.

**Table 2:**

| | Initial charge capacity (mAh/g) | Initial discharge capacity (mAh/g) | Initial efficiency (%) | Average voltage (V) | Cycle life (%) | Energy density (Wh/L) | Low-temp. capacity (mAh/g) @-20°C | DC-IR (Ω) | Pellet density (g/cc) |
|---|---|---|---|---|---|---|---|---|---|
| Preparation Example 2-1 | 154.5 | 147.6 | 95.5 | 3.60 | 99.2 | 1031 | 112.7 | 36.9 | 1.94 |
| Preparation Example 2-2 | 155.6 | 148.8 | 95.6 | 3.60 | 99.3 | 1050 | 116.2 | 35.6 | 1.96 |
| Preparation Example 2-3 | 155.2 | 148.2 | 95.5 | 3.60 | 99.4 | 1051 | 115.7 | 35.7 | 1.97 |
| Comparative Preparation Example 2-4 | 153.7 | 147.1 | 95.7 | 3.60 | 99.3 | 1011 | 109.2 | 37.8 | 2.02 |

Referring to Table 2, Preparation Examples 2-1, 2-2, and 2-3, in which the second positive electrode active material had 30 vol% or more of particles having a particle diameter of greater than or equal to about 10 µm based on a total of 100 vol% of the second positive electrode active material, exhibited high initial charge capacity and discharge capacity, excellent initial efficiency, excellent cycle life, increased energy density, reduced internal resistance, and excellent low temperature performance and, thus, overall improved performance of the rechargeable lithium battery. Accordingly, in preparing the composite positive electrode active materials, the second positive electrode active material having 30 vol% or more of particles having a particle diameter of greater than or equal to about 10 µm based on a total of 100 vol% of the second positive electrode active material was confirmed to improve the low temperature performance of the rechargeable lithium battery and, thus, an overall performance of the rechargeable lithium battery.

### Evaluation Example 3: Evaluation of Pellet Density

The positive electrode active materials of Examples 1 to 2 were measured with respect to pellet density, and the results are shown in Table 3. The pellet density was calculated by putting 3 g of each of the positive electrode active materials in a mold for manufacturing a pellet, maintaining each of the positive electrode active materials under 4.0 tons for 30 seconds to measure a thickness of the pellet, and then determining the pellet density using the thickness of the pellet and a diameter of the mold, shown in Table 3.

**Table 3:**

| | Pellet density (g/cc) |
|---|---|
| Example 1 | 2.40 |
| Example 2 | 2.34 |

Referring to Table 3, Examples 1 to 2 exhibited each pellet density of 2.40 g/cc and 2.34 g/cc, which is an improvement compared to that of Preparation Examples 1-1 to 1-3 using the first positive electrode active material alone and compared to that of Preparation Examples 2-1 to 2-3 using the second positive electrode active material alone, obtained in the same manner as obtaining the pellet densities of Examples 1 to 2 and shown in Tables 1 and 2.

### Evaluation Example 4: Evaluation of Battery Cell Performance

The performance of the rechargeable lithium battery cells of Examples 1 to 2 and Comparative Examples 1 to 6 were evaluated and the results are shown in Table 4. Energy density, low-temperature capacity, and DC-IR of the cells were evaluated in the same manner as in Evaluation Example 1, except that the rechargeable lithium battery cells were charged to a battery voltage of 4.25 V at a 0.2 C-rate and discharged to a cut-off voltage of 2.5 V at the 0.2 C-rate at 25°C instead of being charged to a voltage of 3.8 V at a 0.2 C-rate and discharged to a cut-off voltage of 2.5 V at the 0.2 C-rate at 25°C.

**Table 4:**

| | Energy density (Wh/L) | Low-temperature capacity (mAh/g) @-20°C | DC-IR (Ω) |
|---|---|---|---|
| Example 1 | 1327 | 128.6 | 10.1 |
| Example 2 | 1322 | 132.4 | 10.4 |
| Comparative Example 1 | 1314 | 91.7 | 15.0 |
| Comparative Example 2 | 1136 | 126.5 | 20.2 |
| Comparative Example 3 | 1294 | 128.1 | 10.9 |
| Comparative Example 4 | 1296 | 130.1 | 11.1 |
| Comparative Example 5 | 1266 | 128.2 | 11.8 |
| Comparative Example 6 | 1307 | 127.3 | 10.5 |

Referring to Table 4, Examples 1 and 2, compared to Comparative Examples 1 to 6, exhibited excellent performance characteristics.

For example, Examples 1 and 2 exhibited each DC-IR of 10.1 Ω and 10.4 Ω, which were lower than 10.5 Ω to 20.2 Ω of that of Comparative Examples 1 to 6. In addition, Examples 1 and 2 exhibited each low-temperature capacity of 128.6 mAh/g and 132.4 mAh/g, which were relatively higher than low-temperature capacity of 91.7 mAh/g to 130.1 mAh/g of Comparative Examples 1 to 6. In particular, Comparative Example 1 exhibited low-temperature capacity of 91.7 mAh/g, which confirmed that the examples provided excellent charge and discharge performance in the low-temperature environment.

Examples 1 and 2 each exhibited an energy density of 1327 Wh/L and 1322 Wh/L, respectively, each of which show an improvement when compared to the range of 1136 Wh/L to 1314 Wh/L, which are the energy density values of Comparative Examples 1 to 6. This confirmed that the examples stored energy in a large amount per volume and, thus, were advantageous for implementing a high energy density.

As seen above, Examples 1 and 2 exhibited reduced internal resistance, improved low temperature performance, increased energy density, and the like of the rechargeable lithium battery, and, thus, Examples 1 and 2 exhibited improved performance characteristics of the rechargeable lithium battery.

While this invention has been described for some embodiments, the invention is not limited to the above-disclosed embodiments. Rather, the present disclosure is intended to cover various modifications and equivalent arrangements of the above-described embodiments.

**<Description of Symbols>**

| | | | |
|---|---|---|---|
| 100 : | rechargeable lithium battery | 1 0: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealer | 70: | electrode tab |
| 71: | positive electrode tab | 72: | negative electrode tab |

## Claims

1. A composite positive electrode active material comprising:
a first positive electrode active material comprising a lithium iron phosphate-based compound, the first positive electrode active material being in a form of secondary particles in which a plurality of primary particles are agglomerated;
a second positive electrode active material comprising a lithium manganese iron phosphate-based compound, the second positive electrode active material being in a form of secondary particles in which a plurality of primary particles are agglomerated; and
a third positive electrode active material comprising a lithium nickel-based composite oxide, the third positive electrode active material being 5 wt% to 25 wt% based on a total of 100 wt% of the composite positive electrode active material,
wherein a weight ratio of the first positive electrode active material and the second positive electrode active material is 5:1 to 1:1,
the secondary particles of the first positive electrode active material and the secondary particles of the second positive electrode active material having a particle diameter of greater than or equal to 10 µm are included in an amount of greater than or equal to 30 vol% based on a total of 100 vol% of the first positive electrode active material and the second positive electrode active material.

2. The composite positive electrode active material as claimed in claim 1, wherein
(a) the secondary particles of first positive electrode active material having a particle diameter of greater than or equal to 10 µm are included in an amount of greater than or equal to 30 vol% based on a total of 100 vol% of the first positive electrode active material, and/or
(b) the secondary particles of the second positive electrode active material having a particle diameter of greater than or equal to 10 µm are included in an amount of greater than or equal to 30 vol% based on a total of 100 vol% of the second positive electrode active material,
and/or
(c) the first positive electrode active material is included in an amount of 37.5 wt% to 70 wt% based on a total of 100 wt% of the composite positive electrode active material, and
wherein the second positive electrode active material is included in an amount of 20 wt% to 47.5 wt% based on a total of 100 wt% of the composite positive electrode active material.

3. The composite positive electrode active material as claimed in claim 1 or in claim 2, wherein
(a) the lithium iron phosphate-based compound is represented by:
Liₐ₁Fe₍₁₋ₓ₁₎M¹ₓ₁PO₄,
wherein 0.90≤a1≤1.5, 0≤x1≤0.4, and M¹ is one or more of Al, B, Ca, Ce, Cr, Cu, La, Mg, Mn, Mo, Nb, Ni, Si, Sn, Sr, Ti, V, W, Y, Zn, and Zr,
and, preferably,
(b) the lithium iron phosphate-based compound further comprises one or more of elements Al, Mg, Ti, and V, and
wherein the lithium iron phosphate-based compound comprises the one or more elements of Al, Mg, Ti, and V in an amount of 0.1 mol% to 0.5 mol% based on 100 mol% of a total metal in the lithium iron phosphate-based compound excluding lithium,
and, more preferably,
(c) the lithium iron phosphate-based compound comprises LiFePO₄.

4. The composite positive electrode active material as claimed in any one of claims 1-3, wherein an average particle diameter D₅₀ of the secondary particles of the first positive electrode active material is from 5 µm to 25 µm, and
wherein an average particle diameter D₅₀ of the primary particles constituting the secondary particles of the first positive electrode active material is 0.01 µm to 2 µm.

5. The composite positive electrode active material as claimed in any one of claims 1-4, wherein
(a) the lithium manganese iron phosphate-based compound is represented by:
Liₐ₂Mnₓ₂Fe_{(1-x2-y2})M²_{y2}PO₄,
wherein 0.90≤a2≤1.5, 0.1≤x2≤0.9, 0≤y2≤0.9, and 0.1≤x2+y2<1, and
wherein M² is one or more of Al, B, Ca, Ce, Cr, Cu, La, Mg, Mo, Nb, Ni, Sn, Si, Sr, Ti, V, W, Y, Zn, and Zr,
and, preferably,
(b) the lithium manganese iron phosphate-based compound comprises one or more compounds of LiMn_{0.7}Fe_{0.3}PO₄, LiMn_{0.6}Fe_{0.4}PO₄, LiMn_{0.3}Fe_{0.5}PO₄, LiMn_{0.4}Fe_{0.6}PO₄, and LiMn_{0.3}Fe_{0.7}PO₄.

6. The composite positive electrode active material as claimed in any one of claims 1-5, wherein the lithium manganese iron phosphate-based compound further comprises one or more of Al, Mg, Ti, and V, and
wherein the lithium manganese iron phosphate-based compound comprises the one or more elements of Al, Mg, Ti, and V in an amount of 0.1 mol% to 0.5 mol% based on 100 mol% of a total metal in the lithium manganese iron phosphate-based compound, excluding lithium.

7. The composite positive electrode active material as claimed in any one of claims 1-6, wherein an average particle diameter D₅₀ of the secondary particles of the second positive electrode active material is 5 µm to 25 µm, and
wherein an average particle diameter D₅₀ of the primary particles constituting the secondary particles of the second positive electrode active material is 0.01 µm to 2 µm.

8. The composite positive electrode active material as claimed in any one of claims 1-7, wherein the lithium nickel-based composite oxide comprises a nickel amount greater than or equal to 80 mol% based on 100 mol% of a total metal in the lithium nickel-based composite oxide excluding lithium.

9. The composite positive electrode active material as claimed in any one of claims 1-8, wherein the lithium nickel-based composite oxide is represented by one of the following chemical formulas:
Liₐ₃Niₓ₃M³_{y3}M⁴_{z3P}O_{2-b3}X_{b3},
wherein 0.9≤a3≤1.8, 0.3≤x3≤1, 0≤y3≤0.7, 0≤z3≤0.7, 0.9≤x3+y3+z3≤1.1, and 0≤b3≤0.1,
wherein M³ and M⁴ are different from each other and are each one or more of Al, B, Ba, Ca, Ce, Co, Cr, Cu, Fe, Mg, Mn, Mo, Nb, Si, Sn, Sr, Ti, V, W, Y, Zn, and Zr, and
wherein X is one or more of F, P, and S;
Liₐ₄Niₓ₄Co_{y4}M⁵_{z4}O_{2-b4}X_{b4},
wherein 0.9≤a4≤1.2, 0.3≤x4<1, 0<y4≤0.7, 0≤z4≤0.7, 0.9≤x4+y4+z4≤1.1, and 0≤b4≤0.1,
wherein M⁵ is one or more of Al, B, Ba, Ca, Ce, Cr, Cu, Fe, Mg, Mn, Mo, Nb, Si, Sn, Sr, Ti, V, W, Y, Zn, and Zr, and
wherein X is one or more of F, P, and S; and
Liₐ₅Niₓ₅Co_{y5}M⁶_{z5}M⁷_{w5}O_{2-b5}X_{b5},
wherein 0.9≤a5≤1.2, 0.3≤x5≤0.98, 0.01≤y5≤0.69, 0.01≤z5≤0.69, 0≤w5≤0.68, 0.9≤x5+y5+z5+w5≤1.1, and 0≤b5≤0.1,
wherein M⁶ is one or more of Al and Mn, and M⁷ is one or more elements of B, Ba, Ca, Ce, Cr, Cu, Fe, Mg, Mo, Nb, Si, Sn, Sr, Ti, V, W, Y, Zn, and Zr, and
wherein X is one or more of F, P, and S.

10. The composite positive electrode active material as claimed in any one of claims 1-9, wherein an average particle diameter D₅₀ of the third positive electrode active material is 1 µm to 20 µm.

11. The composite positive electrode active material as claimed in any one of claims 1-10, wherein the third positive electrode active material comprises first particles, second particles, or a combination thereof,
wherein the first particles is in a form of secondary particles in which a plurality of primary particles are agglomerated, and an average particle diameter D₅₀ of the first particles is 10 µm to 25 µm, and
wherein the second particles is in a form of comprises secondary particles, single particles, or a combination thereof, and an average particle diameter D₅₀ of the secondary particles or of the single particles is 1 µm to 8 µm.

12. The composite positive electrode active material as claimed in any one of claims 1-11, wherein the third positive electrode active material comprises a combination of first particles and second particles,
wherein the first particles is in a form of secondary particles in which a plurality of primary particles are agglomerated, and the second particles is in a form of secondary particles, single particles, or a combination thereof,
wherein the first particles is 40 wt% to 95 wt% based on a total of 100 wt% of the first particles and the second particles in the third positive electrode active material; and
the second particles is in an amount from 5 wt% to 60 wt% based on a total of 100 wt% of the first particles and the second particles in the third positive electrode active material.

13. A positive electrode comprising:
a positive electrode current collector; and
a positive electrode active material layer on the positive electrode current collector,
wherein the positive electrode active material layer comprises the composite positive electrode active material as claimed in any one of claims 1-12.

14. A rechargeable lithium battery comprising:
the positive electrode as claimed in claim 13;
a negative electrode; and
an electrolyte.
